# EUROPEAN PATENT APPLICATION

(11) **EP 2 582 021 A1**
(43) Date of publication of application: **17.04.2013**
(21) Application number: 11184531.9
(22) Date of filing: 10.10.2011
(51) Int. Cl.: H02K 5/20, H02K 9/10

(54) **Electric machine and method for manufacturing it**

(71) Applicant: Alstom Technology Ltd, 5400 Baden (CH)
(72) Inventor: Safari Zadeh, Hossein, 5504 Othmarsingen (CH)

(57) **Abstract**

The electric machine (1) comprises a casing (2) that houses a stator (3) and a rotor (4). The stator (3) has cooling channels (5) for a cooling gas. The electric machine also has an end casings (9) connected to at least one casing (2) end. The end casing (9) has channels (10) for the cooling gas. Deflectors (15) to guide the cooling gas between the channels (10) of the stator (3) and the channels (5) of the end casing (9) are provided. The deflectors (15) are separate pieces from the end casing (9). The deflectors (15) are connected between the stator (3) and the end casing (9).

## Description

### TECHNICAL FIELD

The present invention relates to an electric machine and a method for manufacturing it. In particular in the following reference to an electric machine such as a turbogenerator (i.e. a synchronous generator to be connected to a turbine such as a gas or steam turbine) is made. Naturally, in different examples the electric machine can also be a different electric generator such as an asynchronous generator, an electric motor, etc.

### BACKGROUND

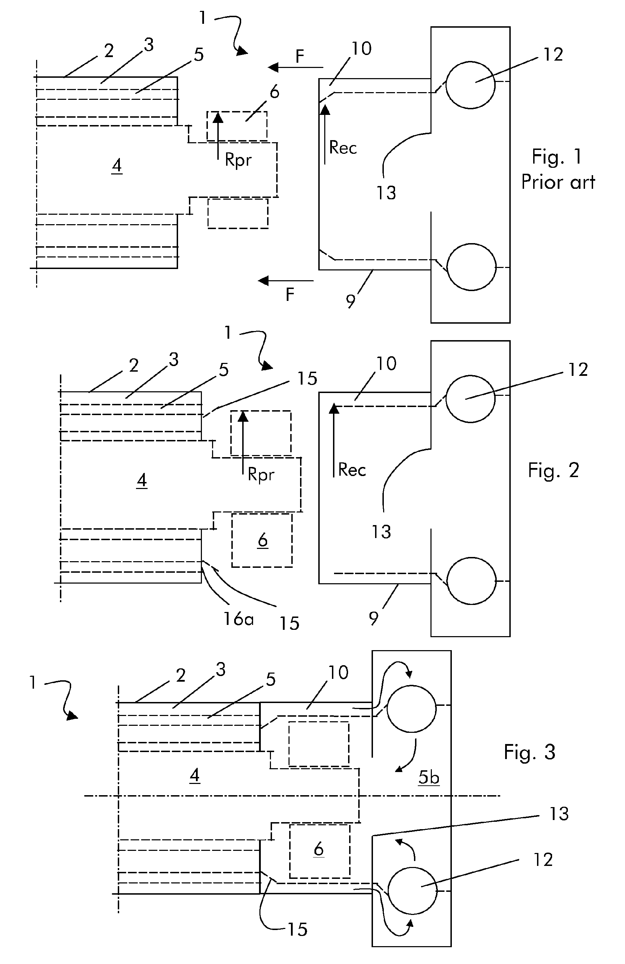

Figure 1 shows an example of a traditional electric machine such as a turbogenerator. The electric machine 1 has a casing 2 with a stator 3 and a rotor 4.

The stator 3 has cooling channels 5.

In addition, the stator 3 has windings connected to phase rings 6 in turn connected to bushings (the bushings are not shown).

The casing 2 is connected to two end casings 9 (one at each of its sides); figure 1 shows only one end casing 9 separated from the casing 2 (i.e. before their connection).

The end casings 9 have cooling channels 10 that drive a cooling gas coming from the stator 3 to coolers 12.

Reference 13 indicates an aperture where a fan (not shown) is provided.

Traditionally, the casing 2 and the end casings 9 are separately manufactured and are then connected on the yard. In this respect, the end casing 9 is slipped onto the phase rings 6 and terminal part of the rotor 4 (usually referred to as rotor shaft). Arrows F indicates this operation.

Naturally, for the end casing 9 to be slipped onto the phase rings 6, the phase rings 6 must have an external radius Rpr smaller than the smallest radius of the end casing Rec (in particular the smallest radius of those parts of the end casing that must be slipped onto the phase rings 6).

Usually, the part of the end casing 9 with the smallest radius is the terminal part of the cooling channels 10. Thus the terminal part of the cooling channels 10 must have a radius Rec larger than the radius Rpr of the phase rings 6.

This requirement is usually fulfilled.

Nevertheless, new generators have a larger power than in the past; for this reason the stator windings often include more windings in parallel for each phase; this imply the use of more phase rings in parallel and, thus, an increased size thereof.

It is clear that when the size (in particular the radial radius Rpr thereof) of the phase rings 6 is larger than the radius Rec of the smaller part of the end casing 9 to be slipped onto them, the end casing 9 can not be connected to the casing 2 (because the end casing 9 can not be slipped onto the phase rings 6).

### SUMMARY

An aspect of the present invention includes providing an electric machine and a method for manufacturing it by which an end casing can be connected to a casing also when the phase rings have large dimensions that prevent the end casing from being slipped onto the phase rings.

This and further aspects are attained according to the invention by providing an electric machine and a method in accordance with the accompanying claims.

### BRIEF DESCRIPTION OF THE DRAWINGS

Further characteristics and advantages of the invention will be more apparent from the description of a preferred but non-exclusive embodiment of the electric machine and method illustrated by way of non-limiting example in the accompanying drawings, in which:
Figure 1 is a schematic view from the top of a part of an electric machine according to the prior art;
Figure 2 is a schematic view from the top of a part of an electric machine in an embodiment of the invention;
Figure 3 is an assembled schematic view from the top of a part of the electric machine of figure 2;
Figure 4 is a front view of a casing with a stator and deflectors;
Figure 5 is a side view of the casing of figure 3;
Figure 6 is a partially exploded view of deflectors and casing;

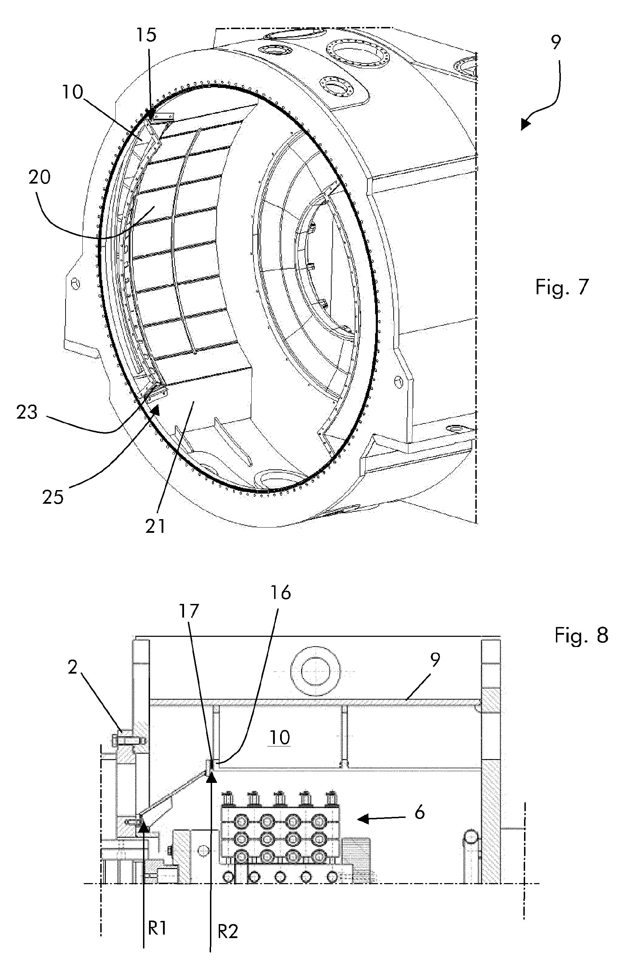

Figure 7 is a perspective view of an end casing;
Figure 8 is a longitudinal cross section of an end casing in an embodiment of the invention;
Figure 9 is a particular of figure 7;

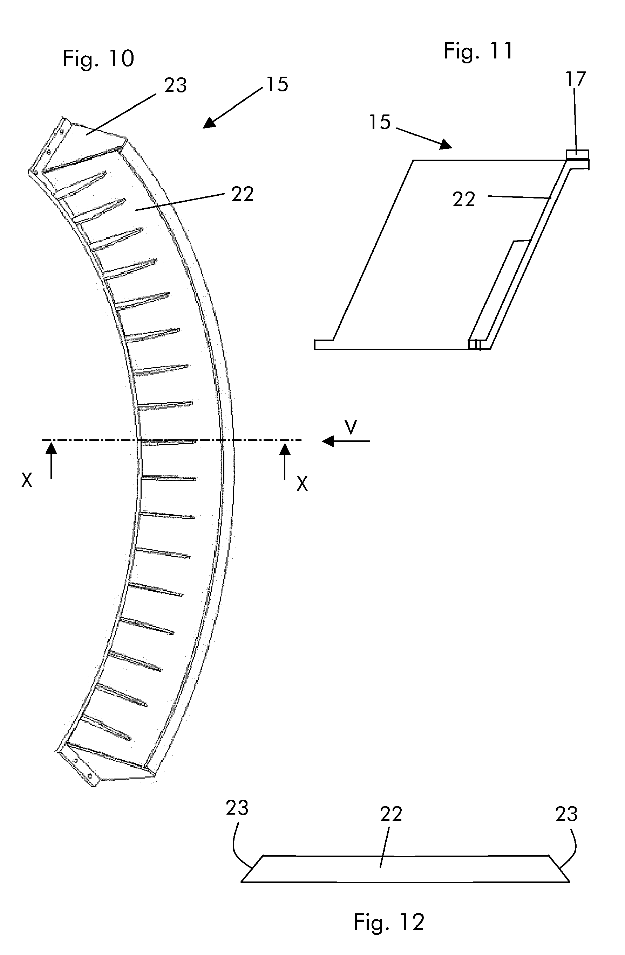

Figure 10 shows a deflector;
Figure 11 shows an enlarged cross section through line X-X of figure 10;
Figure 12 shows a reduced view according to arrow V of the deflector of figure 10; and

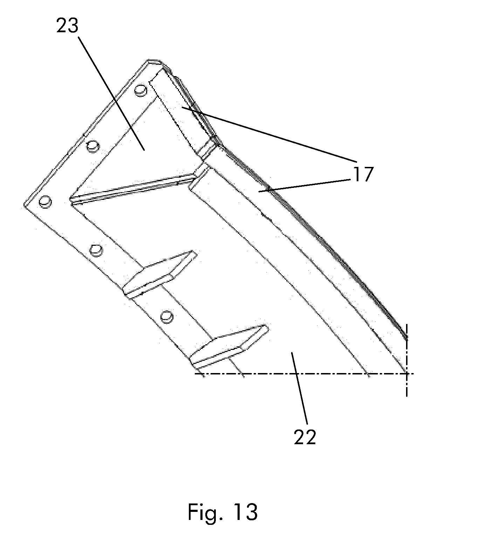

Figure 13 is a particular of the deflector.

### DETAILED DESCRIPTION OF EMBODIMENTS OF THE INVENTION

In the following the electric machine is described first with reference to the same numbers already introduced above.

The electric machine 1 (such as a synchronous electric generator) comprises a casing 2 that houses a stator 3 and a rotor 4.

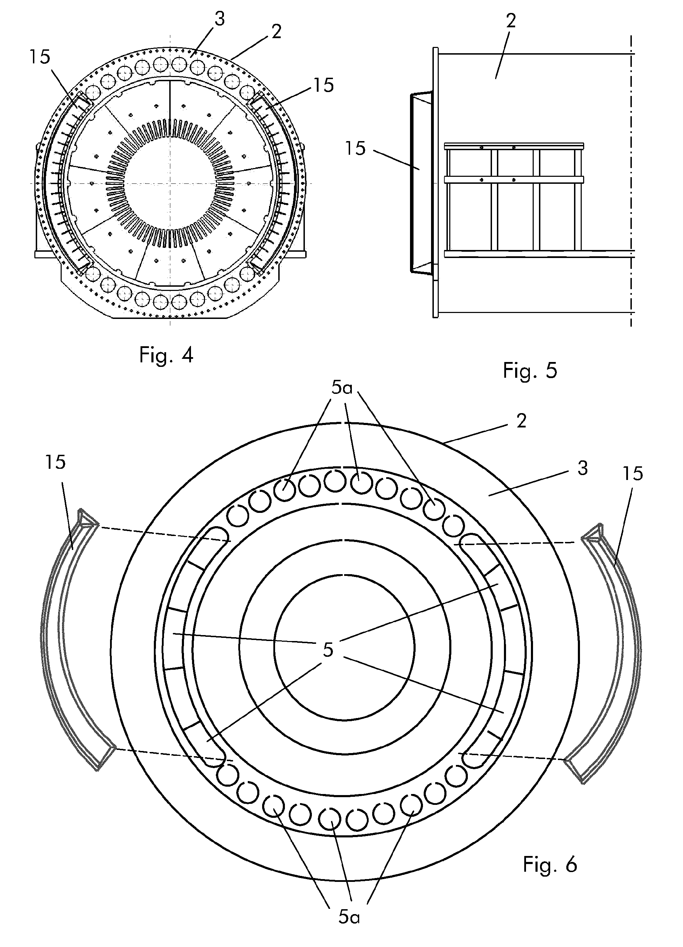

The stator 3 has cooling channels 5 for a cooling gas. In addition (see figure 6) the stator 3 also has additional cooling channels 5a.

End casings 9 are connected to the two opposite casing 2 ends; also the end casings 9 have channels 10 for the cooling gas.

In particular, the cooling gas passes through the channels 5 of the stator 3 to the channels 10 of the end casing 9 to then reach the coolers 12. From the cooler 12 the cooling gas enters a plenum 5b (figure 3) and thus via the channels 5a (figure 6) it is brought back into the stator 2.

Phase rings 6 are provided that are connected to windings of the stator 3 and are located around the rotor 4, at a position within the end casing 9.

Typically, the phase rings 6 are provided only at one end of the rotor 4.

The electric machine 1 also includes (in particular at an end casing 9 that houses the phase rings 6) deflectors 15 to guide the cooling gas between the channels 5 of the stator 3 and the channels 10 of the end casing 9.

The deflectors 15 are separate pieces from the end casing 9 and are connected between the stator 3 and the end casing 9.

Preferably the deflectors 15 are also separate pieces from the stator 3 and are removably fixed to the stator 3 (for example by bolts or screws) on non-removably fixed to the stator 3 (for example by brazing or welding).

The deflectors 15 project from a side of the stator 3 adjacent to cooling channels mouths 16a.

The deflector 15 has a first radius R1 (i.e. distance from the longitudinal axis of the rotor) at a part connected to the casing 2, and a second radius R2 (i.e. distance from the longitudinal axis of the rotor) at a part connected to a border 16 of the channel 10 of the end casing 9.

The first radius R1 is smaller than the second radius R2 and the phase rings 6 have a radial radius Rpr that is larger than first radius R1 and smaller than the second radius R2.

The end casing at the other end of the casing 2 (i.e. the end casing connected at the side of the casing 2 without the phase rings 6) can be of traditional type (e.g. similar to the one shown in figure 1) or also according to an embodiment of the invention (e.g. similar or equal to the one shown in figure 2).

The channels 10 of the end casing 9 have their border 16 facing the stator 3. The deflectors 15 rest against this border 16 and advantageously also a seal 17 is provided between them.

The channels 10 of the end casing 9 have radial sides 20 and circumferential sides 21.

Likewise, the deflectors 15 have radial sides 22 and circumferential sides 23.

The circumferential sides 23 of the deflectors 15 are connected to the circumferential sides 21 of the channels 10.

Advantageously, adjustable elements 25 are provided between the circumferential sides 21 of the end casing 9 and the circumferential sides 23 of the deflectors 15 connected to them, for them to match each other.

The adjustable elements 25 extend from the end casing 9 and comprise a support 26 removably connected (for example by screws of bolts) to the end casing 9, and a seal 27 connected in an adjustable position to the support 26.

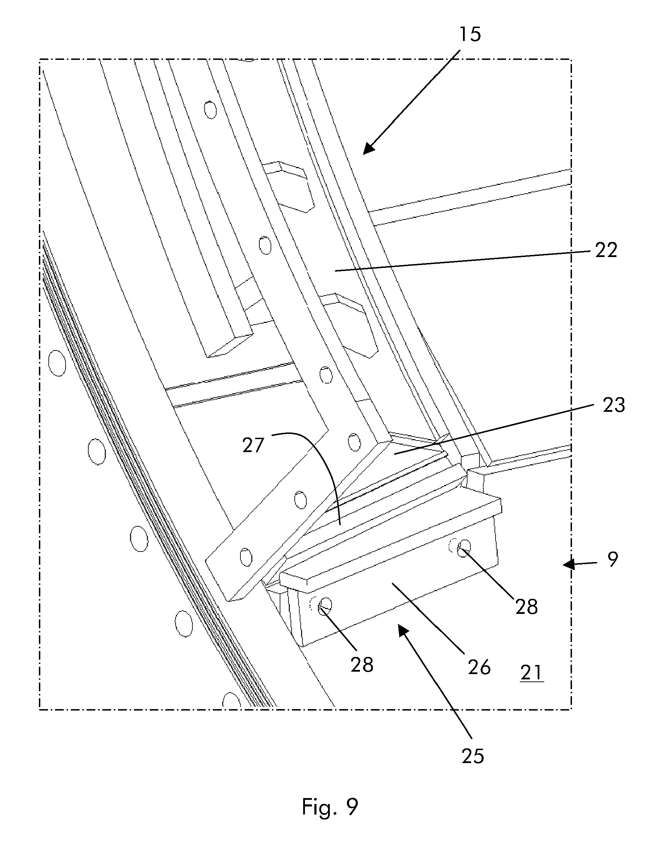

Figure 9 shows an example of the adjustable elements 25; it shows the support 26 being a T element with holes 28 for screws, and the seal 27 being a plate that can be welded to the support 26 and is provided with rubber on its face that has to rest on the deflectors 15.

The assembling of the electric machine is apparent from that described and illustrated and is substantially the following.

First the deflectors 15 are connected to the stator 3, then the end casing 9 is slipped onto the phase rings 6, bringing the borders 16 of the channels 10 against the free borders of the deflectors 15.

As for the circumferential sides 23 of the deflectors 15 (to guarantee the sealing between the end casing 9 and the deflectors 15), the following steps can be followed:
- STEP 1: first the supports 26 are connected to the end casing 9 (this can also be the second step);
- STEP 2: then the end casing 9 is connected to the casing 2 (this can also be the first step);
- STEP 3: thus the seal 27 is tack welded or brazed to the support 26 (i.e. only some points are welded or brazed), such that the seal 27 matches the side 23;
- STEP 4: the support 26 with the seal 27 connected to it is thus removed and the seal 27 is fully welded or brazed to the support 26;
- STEP 5: therefore the adjustable element 25 (including the support 26 and seal 27) is connected again to the end casing 9 achieving a correct seal between the end casing 9 and deflectors 15.

It is anyhow clear that also other methods to connect and seal the end casing 9 and the deflectors 15 can be used.

The present invention also refers to a method for manufacturing an electric machine.

The method includes the steps of:
- providing a casing 2 with a stator 3 and a rotor 4, the stator 3 having cooling channels 5 for a cooling gas,
- providing at least an end casing 9 having channels 10 for the cooling gas,
- providing at least a deflector 15 for guiding the cooling gas between the channels 5 of the stator 3 and the channels 10 of the end casing 9,
- the deflector 15 is provided as a separate piece from the stator 3,
- first the deflector 15 is connected to the stator 3, and
- then the end casing 9 is connected to the casing 2 end, with the deflector 15 between the channels 5 of the stator 3 and the channels 10 of the end casing 9.

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 4: rotor
- 5: cooling channel
- 5a: cooling channel
- 5b: plenum
- 6: phase rings
- 9: end casing
- 10: cooling channel
- 12: cooler
- 13: aperture
- 15: deflector
- 16: border
- 16a: mouth
- 17: seal
- 20: radial side of 10
- 21: circumferential side of 10
- 22: radial side of 15
- 23: circumferential side of 15
- 25: adjustable element
- 26: support
- 27: seal
- 28: hole
- F: slipping of 9 onto 6
- Rpr: radius phase rings
- Rec: radius end casing
- R1: first radius
- R2: second radius

## Claims

1. Electric machine (1) comprising:
- a casing (2) that houses a stator (3) and a rotor (4), the stator (3) having cooling channels (5) for a cooling gas,
- an end casings (9) connected to at least one casing (2) end, the end casing (9) having channels (10) for the cooling gas;
**characterised by** further comprising
- at least a deflector (15) to guide the cooling gas between the channels (10) of the stator (3) and the channels (5) of the end casing (9),
- the deflector (15) being a separate piece from the end casing (9),
- the deflector (15) being connected between the stator (3) and the end casing (9).

2. Electric machine (1) according to claim 1, **characterised in that** the deflector (15) is a separate piece from the stator (3).

3. Electric machine (1) according to claim 1, **characterised in that** the deflector (15) is fixed to the stator (3).

4. Electric machine (1) according to claim 1, **characterised in that** the channels (10) of the end casing (9) have a border (16) facing the stator (3), wherein the deflector (15) rests against this border (16).

5. Electric machine (1) according to claim 4, **characterised in that** between the deflector (15) and the border (16) a seal (17) is provided.

6. Electric machine (1) according to claim 1, **characterised in that**:
- the channels (10) of the end casing (9) have circumferential sides (21), and
- the deflector (15) has sides (23) connected to the circumferential sides (21) of the channels (10) of end casing (9),
- wherein adjustable elements (25) are provided between the circumferential sides (21) of the channels (10) of the end casing (9) and the sides (23) of the deflectors (15) connected to them, for them to match each other.

7. Electric machine (1) according to claim 6, **characterised in that** the adjustable elements (25) extend from the end casing (9).

8. Electric machine (1) according to claim 7, **characterised in that** the adjustable elements (25) comprise a support (26) removably connected to the end casing (9), and a seal (27) connected in an adjustable position to the support (26).

9. Electric machine (1) according to claim 1, **characterised in that** the deflector (15) has:
- a first radius (R1) at a part connected to the stator (3), and
- a second radius (R2) at a part connected to a border (16) of the channel (10) of the end casing (9),
- the first radius (R1) being smaller than the second radius (R2),
- wherein phase rings (6) have a radius (Rpr):
a. larger than first radius (R1), and
b. smaller than the second radius (R2).

10. Stator (3) for an electric machine (1) comprising cooling channels (5) for a cooling gas, **characterised by** further comprising at least a deflector (15) to guide the cooling gas, the deflector (15) projecting from a side of the stator (3) adjacent to cooling channels mouths (16a).

11. End casing (9) for an electric machine (1) comprising channels (10) for a cooling gas, wherein:
- the end casing (9) has a portion to be connected to a casing (2), and
- the channels (10) have borders (16) facing the same side as the portion of the end casing (9) to be connected to the casing (2),
**characterised in that** the borders of the channels (10) are located within the end casing (9).

12. Method for manufacturing an electric machine (1) comprising the steps of:
- providing a casing (2) with a stator (3) and a rotor (4), the stator (3) having cooling channels (5) for a cooling gas,
- providing at least an end casing (9) having channels (10) for the cooling gas,
- providing at least a deflector (15) for guiding the cooling gas between the channels (5) of the stator (3) and the channels (10) of the end casing (9), **characterised in that**:
- the deflector (15) is provided as a separate piece from the end casing (9),
- the deflector is connected to the stator (3),
- the end casing (9) is connected to the casing (2) end, with the deflector (15) between the channels (5) of the stator (3) and the channels (10) of the end casing (9).
